Europäisches Patentamt

European Patent Office

Office européen des brevets

(19)

(11) Veröffentlichungsnummer: **0 056 784**
**B1**

# (12) EUROPÄISCHE PATENTSCHRIFT

(45) Veröffentlichungstag der Patentschrift:
15.07.87

(21) Anmeldenummer: 82810008.1

(22) Anmeldetag: 12.01.82

(51) Int. Cl.⁴: **B 23 H 1/02**

(54) Verfahren und Vorrichtung zur automatischen Prozessführung beim funkenerosiven Bearbeiten.

(30) Priorität: 13.01.81 CH 190/81

(43) Veröffentlichungstag der Anmeldung:
28.07.82 Patentblatt 82/30

(45) Bekanntmachung des Hinweises auf die Patenterteilung:
15.07.87 Patentblatt 87/29

(84) Benannte Vertragsstaaten:
FR IT

(56) Entgegenhaltungen:
FR - A - 2 211 322
FR - A - 2 443 712

(73) Patentinhaber: **A.G. FÜR INDUSTRIELLE ELEKTRONIK AGIE LOSONE BEI LOCARNO, CH-6616 Losone (CH)**

(72) Erfinder: **Bühler, Ernst, Salita degli Orti, CH-6616 Losone (CH)**

(74) Vertreter: **EGLI-EUROPEAN PATENT ATTORNEYS, Horneggstrasse 4, CH-8008 Zürich (CH)**

ACTORUM AG

### Beschreibung

Die Erfindung betrifft Verfahren und Vorrichtungen zur automatischen Prozessführung beim funkenerosiven Bearbeiten unter stark veränderlichen Prozessbedingungen, verursacht durch übermässig schwankende Bearbeitungsflächenänderungen. Die Verfahren und die dazu verwendeten Vorrichtungen können in allen Gebieten der funkenerosiven Bearbeitung verwendet werden. Besonders interessant ist die Anwendung beim funkenerosiven Senkbearbeiten von Raumformen mit überlagerter Planetärbewegung sowie beim funkenerosiven Konischschneiden und funkenerosivem Schneiden von Werkstücken stark unregelmässiger Dicke.

Die vorgenannten Anwendungsfälle sind alle charakterisiert durch starke Störungen des Erosionsprozesses infolge bedeutender Änderung der zu bearbeitenden Werkstückflächen. Diese Flächenänderungen können sich über mehr als zwei Dekaden erstrecken und führen ohne einen Eingriff des Operators zwangsläufig zu sehr langen Bearbeitungszeiten oder zu einer Beschädigung von Elektrode und Werkstück infolge Überbelastung. Es ist Zweck der Erfindung, den Operator von ständigen Eingriffen in den Prozess zu befreien und kürzeste Bearbeitungszeiten bei optimalem Bearbeitungsresultat zu garantieren.

Es ist bekannt, den funkenerosiven Prozess in Abhängigkeit der Bearbeitungsflächenänderung zu beeinflussen. Kondo fand schon 1969 eine Möglichkeit, durch Messung der Entladungsfrequenz und deren Division durch den Vorschubweg, während dem Prozess Rückschlüsse auf die aktuelle Bearbeitungsfläche zu ziehen. Diese Methode wurde in der Schweizer Patentschrift Nr. 525 061 veröffentlicht. Die von Kondo angewendete Regelvorrichtung stösst auf Schwierigkeiten, die nur durch periodische Rückzugbewegungen der Pinole und damit ausgelöster Leistungsreduktion zu meistern sind. (Spalte 26, Zeilen 27 bis 36 der CH-PS 525 061).

Languepin schlug 1975 (DE-AS 2 505 944) vor, die Vorschubgeschwindigkeit des Servosystems mittels der Generatorleistung auf einen konstanten Wert von 0,3 bis 0,4 mm/min. zu regeln.

Das von Languepin vorgeschlagene Regelverfahren der konstanten Vorschubgeschwindigkeit geht von der Annahme aus, dass für grosse und für kleine Bearbeitungsflächen mit derselben Stromdichte erodiert werden soll. Dies ist für grosse Flächenänderungen jedoch etwa gleich falsch wie das Erodieren mit konstanter Leistung, was bei herkömmlichen Erodieranlagen der Fall ist.

Saito von Mitsubishi offenbarte im Jahre 1977 in der japanischen Patentanmeldung JP-OS 53-131.598/74 eine Erosionsmaschine nach dem Drahtschneideprinzip, bei welcher über die numerische Bahnsteuerung die elektrischen Parameter am Impulsgenerator in Abhängigkeit von der Werkstückhöhe eingestellt werden. Saito kommt auf die praktisch schon bekannte Erkenntnis, dass innerhalb bestimmter Grenzen ein linearer Zusammenhang besteht zwischen der auf die Funkenstrecke aufgebrachten Leistung und der Vorschubgeschwindigkeit, und dass dies Rückschlüsse auf die Schnitthöhe zulässt.

In der US-PS 4 071 729 ist ein Prozessregler beschrieben, der in herkömmlicher Weise die Eingabedaten von einer Bedienungsperson mit den Werten am Arbeitsspalt verknüpft und nach einem bestimmten Programm verarbeitet. Der Zweck dieses Prozessreglers ist die Aufrechterhaltung des durch das Programm oder durch die Bedienungsperson definierten Bearbeitungszustandes. Eine Leistungsanpassung bei wechselnden Bearbeitungsflächen des Werkstückes und bei verschiedenen Bearbeitungsbedingungen im Arbeitsspalt ist nicht vorgesehen.

Keine der vier Veröffentlichungen gibt einen Anhaltspunkt über eine Leistungsanpassung, weder bei wechselnder Bearbeitungsfläche noch bei verschiedenen Bearbeitungsarten. Ohne Kenntnis dieser Grundlagen ist jedoch eine allgemeingültige Strategie für die automatische Prozessführung bei wechselnder Bearbeitungsfläche nicht zu realisieren. Maschinen, die nach den vier Veröffentlichungen geregelt würden, wären dann weder universell einsetzbar noch ideal an die Prozessbedingungen anpassbar. Dies sind wahrscheinlich auch die Gründe, warum sich solche Maschinen bis jetzt auf dem Markt nicht durchsetzen konnten.

Der Erfindung liegt die Aufgabe zugrunde, durch eine allgemeingültige Regelstrategie für für jede denkbare erosive Bearbeitungsart den Prozess bei wechselnder Bearbeitungsfläche optimal und automatisch zu führen.

Diese Aufgabe wird erfindungsgemäss durch die in den Patentansprüchen definierten Merkmale gelöst. Im allgemeinen wird damit die auf die Funkenstrecke 10 aufgebrachte Leistung p ermittelt und mit der Vorschubgeschwindigkeit V über eine allgemeingültige Regelstrategie verknüpft. Durch die Vorgabe einer Bearbeitungsintensität a kann jeder Feinheitsgrad der Bearbeitung gewählt werden, wobei dieser Feinheitsgrad für jede Bearbeitungsflächengrösse optimal erreicht wird.

Die Vorteile der Erfindung liegen darin, dass ein solches Prozessleitsystem universell für jede funkenerosive Bearbeitung von Mikrodrahtschneiden bis gröbste Senkbearbeitung einsetzbar ist. Das funkenerosive Konischschneiden wird problemlos, ebenfalls das planetäre Einsenken stark kantiger Elektroden. Durch die optimale Leistungsanpassung ergibt sich beim Schneiden nebst höherer Schnittleistung eine konstantere Schnittbreite, und Drahtrisse treten kaum noch auf. Im Senkbearbeiten hat man zudem bessere Oberflächenqualität und geringeren Elektrodenverschleiss zu erwarten, da partielle Überlastungen der Elektrode eliminiert sind.

Einzelne Ausführungsformen der Erfindung sowie Diagramme sind in den Figuren 1 bis 7 dargestellt und werden anschliessend näher erläutert.

Es zeigen:

Fig. 1 Diagramm und mathematische Zusammenhänge der universellen Regelstrategie,

Fig. 2 Schaltungsanordnung mit direkter Ermittlung der Leistung p,

Fig. 3 Schaltungsanordnung mit Ermittlung der Leistung p ohne Messung des Stromes i,

Fig. 4 Schaltungsanordnung mit Ermittlung der Leistung p ohne Messung der Spannung u,

Fig. 5 Schaltungsanordnung ohne messtechnische Ermittlung der Leistung p,

Fig. 6 Zeitlicher Verlauf der wichtigsten Signale,

Fig. 7 Schaltungsanordnung für den mathematischen Prozessor 21 ohne Messung der Leistung p.

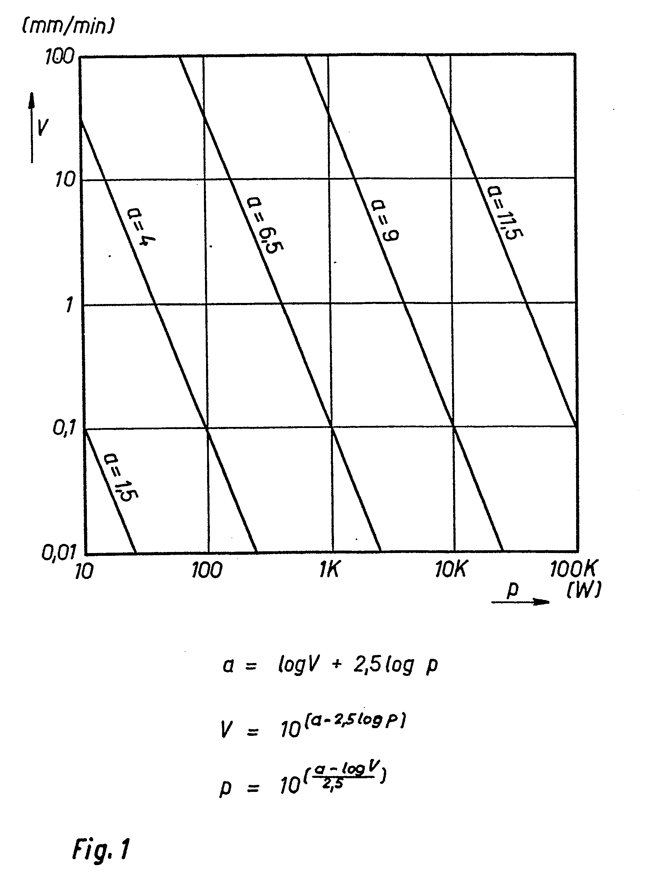

In Fig. 1 ist das fundamentale Diagramm für die Regelstrategie sowie dessen mathematischen Zusammenhänge dargestellt.

Durch Auswertung einer grossen Zahl von Versuchen wurde festgestellt, dass bei jedem Bearbeitungsfall die optimale Regellinie zwischen Vorschubgeschwindigkeit V und der auf die Funkenstrecke aufgebrachten Leistung p eine Gerade mit konstanter Neigung ist, wenn beide Variablen p und V im Logarithmischen Massstab zueinander stehen. Dabei drängte sich die Einführung eines neuen, universellen Prozessparameters auf, welcher die Parallelverschiebung dieser Regellinie beschreibt. Da dieser neue Parameter bei einem kleinen Wert feine Bearbeitung und bei einem grossen Wert grobe Bearbeitung kennzeichnet, wurde dieser Bearbeitungsintensität genannt. Eine Bearbeitungsintensität a von 1 bis 6 liegt beim Drahtschneiden vor, währenddem diese beim Senken bis etwa 12 betragen kann. Die Bereiche der Leistung p bewegen sich dabei zwischen 10 Watt und 100 Kilowatt und der Vorschubgeschwindigkeit zwischen 0,01 mm/min und 100 mm/min. Würde diese Gerade für die Bearbeitungsintensität horizontal im Diagramm liegen, so würde die Bearbeitung bei wechselnder Fläche immer mit konstanter Leistungsdichte, d.h. Leistung pro Flächeneinheit ausgeführt und somit bei konstanter Vorschubgeschwindigkeit.

Bei traditionellen Erosionsanlagen liegt diese Gerade senkrecht und die Leistungsdichte steigt direkt proportional mit der Vorschubgeschwindigkeit V. Erhöht sich hier die Vorschubgeschwindigkeit V um beispielsweise zwei Dekaden, wird die Leistungsdichte ebenfalls hundertmal grösser. Bei optimaler Bearbeitung wird infolge der Neigung der Geraden die Leistungsdichte nur um das etwa 15,8-fache erhöht, wenn sich die Vorschubgeschwindigkeit V um zwei Dekaden erhöht. Die Neigung der Geraden ist in den mathematischen Beziehungen durch den Faktor 2.5 charakterisiert. Dies ist der experimentell ermittelte optimale Wert. Es ist klar, dass dieser Wert in engen Grenzen variiert werden darf, ohne dass das Resultat stark verschlechtert wird. Die mathematische Beziehung ist in Fig. 1 nach allen drei Variablen aufgelöst. Es genügen jeweils zwei Variablen um die dritte zu bestimmen.

Eine direkte physikalische Erklärung dieser mathematischen Beziehung konnte vorerst nicht gefunden werden. Es ist jedoch klar, dass je kleiner eine zu erodierende Fläche ist, umso besser kann die entstandene Prozesswärme, die Erosionspartikel und das Prozessgas aus der Erosionszone entfernt werden. Dadurch darf eine kleine Fläche zwar nicht mit der gleichen Leistung p belastet werden wie eine grössere, wohl aber mit einer höheren Leistungsdichte.

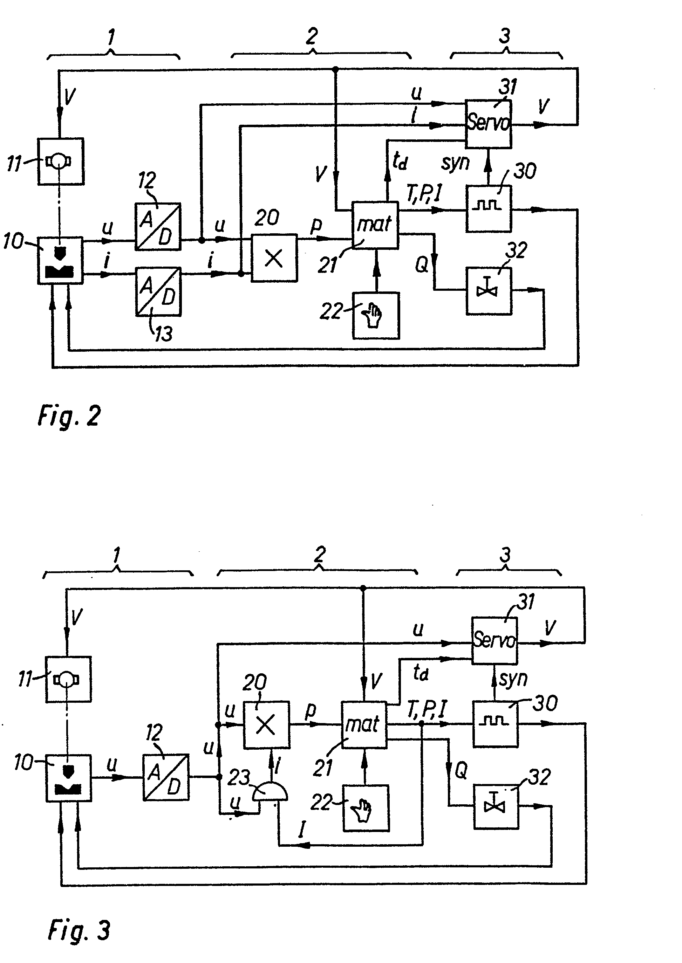

Fig. 2 zeigt eine erste Ausführungsform einer Funkenerosionsanlage, welche nach dem neuen Regelverfahren funktioniert. Die Anlage besteht aus den Bereichen Erosions-Maschine 1, Prozessleitsystem 2 und Leistungsteil 3. Die Erosions-Maschine 1 hat einen Servoantrieb 11, welcher eine oder beide Elektroden der Funkenstrecke 10 relativ zueinander bewegt, weiter sind nicht näher erläuterte Messeinrichtungen für den Strom i und die Spannung u vorhanden. Diese Messwerte werden über je einen Analog-Digital-Wandler 12, 13 in digitale Form umgewandelt und an das Prozessleitsystem 2 und den Leistungsteil 3 übertragen. Die Analog-Digital-Wandler sollten eine Bandbreite von mindestens 10 MHz haben, wie beispielsweise ein Produkt SDA 5010 von SIEMENS, Deutschland oder TDC 1014 von TRW, Kalifornien, USA oder UAB 1005 von THOMSON, Frankreich.

Der Servoregler 31 des Leistungsteils 3 empfängt die digitalen Signale des Stromes i und der Spannung u von den Analog-Digital-Wandlern 12, 13 sowie ein Synchronisationssignal syn vom Impulsgenerator 30 und ein Sollwertsignal für die mittlere Zündverzögerung $t_d$ vom mathematischen Prozessor 21. Es sind verschiedene Methoden bekannt, um aus diesen Informationen die Vorschubgeschwindigkeit V abzuleiten und so den Prozess ständig bei der mittleren vorgegebenen Zündverzögerung $t_d$ zu halten. Normalerweise sind im Servoregler noch weitere Detektoren, z.B. für die schädlichen stehenden Entladungen oder für Kurzschlüsse, vorhanden sowie Einrichtungen zum schnellen Zurückziehen und Wiedervorschieben der Elektrode. Als Beispiel eines solchen Servoreglers 31 sei hier nur die Anordnung von Köhler genannt, welche in der DE-AS-2 214 790 ausführlich beschrieben ist.

Die Multiplikatorschaltung 20 des Prozessleitsystems 2 empfängt ebenfalls die digitalen Signale des Stromes i und der Spannung u.

Daraus wird ständig das Produkt der beiden Signale gebildet, was ständig der auf der Funkenstrecke 10 anliegenden Leistung p entspricht.

In einer bevorzugten Ausführungsform besteht diese Multiplikatorschaltung 20 aus einem sogenannten ROM (Read Only Memory), also einem digitalen Nurlesespeicher. Beispielsweise kann ein Produkt SN 54 S 472 von TEXAS INSTRUMENTS, Dallas USA, verwendet werden. Dieser Baustein hat 9 Adresseneingänge und 8 Datenausgänge. Die speicherbare Datenmenge ist also 512 mal 8 bit. Es können in diesem Falle z.B. 4 bit der Adresseneingänge für die Spannungsinformation u verwendet werden, was beispielsweise einem analogen Spannungsbereich von 20 Volt bis 50 Volt bei einer Auflösung von 2 Volt entsprechen würde. Die restlichen 5 bit der Adresseneingänge würden dann für beispielsweise einen analogen Strombereich von 0 Ampere bis 62 Ampere bei 2 Ampere Auflösung verwendet. Der Leistungsbereich ist dann 0 Watt bis 3100 Watt. bei einer möglichen Auflösung von 8 bit oder etwa 12 Watt.

Jeder dieser 8 bit Datenspeicher kann nun durch eine Adressenkombination aufgerufen werden und alsdann erscheint dieser Dateninhalt am Ausgang. Der Dateninhalt wird so programmiert, dass er dem Produkt, oder unter Umständen schon dem Logarithmus des Produktes, aus Strom i mal Spannung u entspricht.

Jeder Speicherplatz ist also in diesem Beispiel mit dem Produkt der ersten 4 bit mal den restlichen 5 bit seiner Adresse belegt. Man hat für dieses Beispiel eine typische Multiplikationszeit von 55 Nanosekunden, unabhängig von den Werten für Strom i und Spannung u zu erwarten.

Der mathematische Prozessor 21 empfängt das digitale Signal der Leistung p und das digitale, oder gegebenenfalls über einen Analog-Digital-Wandler digitalisierte Signal der Vorschubgeschwindigkeit V. Der mathematische Prozessor 21 ist zusätzlich an eine Eingabeeinheit 22 angeschlossen.

Diese Eingabeeinheit 22 kann eine Tastatur oder Wählschalter aber auch ein Bandlesegerät sein. Über diese Eingabeeinheit 22 wird der Erosionsanlage mitgeteilt, welcher Typ Erosionsbearbeitung bei welchen Randbedingungen ausgeführt werden soll. Anhand dieser Angaben wird der Prozess mit einer vorprogrammierten Start-Prozessparameter-Kombination $t_d$, T, P, I, Q gestartet. Der mathematische Prozessor 21 beginnt nun sofort die Dateneingänge für die Leistung p und die Vorschubgeschwindigkeit V abzufragen und über eine angepasste Zeitperiode deren Mittelwerte zu bilden.

Diese Zeitperiode muss an die Prozessparameter Impulszeit T und Pausenzeit P angepasst sein, um nicht Regelvorgänge auszulösen, welche der Taktfrequenz des Impulsgenerators 30 folgen.

Die Mittelwertbildung sollte in jedem Fall etwa dreimal langsamer sein als die Taktfrequenz des Impulsgenerators 30. Es wird alsdann schrittweise ein Mikroprogramm abgearbeitet, auf das hier nicht näher eingegangen wird. Dabei wird nach der ersten Gleichung in Fig. 1 die aktuelle Bearbeitungsintensität a bestimmt und diese mit der gewollten, über die Eingabeeinheit 22 vorgegebenen Bearbeitungsintensität a verglichen. Je nachdem ob das Resultat grösser, kleiner oder gleich ist, wird nun bekannt, ob man sich rechts, links beziehungsweise auf der gewollten Gerade im Diagramm nach Fig. 1 befindet.

Es kann nun eine gegebenenfalls modifizierte Prozessparameterkombination $t_d$, T, P, I, Q ausgegeben werden. Dies geschieht allgemein so, dass einzelne der Parameter $t_d$, T, P, I, Q pro Regeldurchgang um höchstens einen Schritt geändert werden, andere höchstens jeden zweiten oder dritten Regeldurchgang um höchstens einen Schritt geändert werden dürfen. Es kann aber auch in vorprogrammierten Verhältnissen, welche aus Erfahrung bekannt sind, die modifizierte Prozessparameterkombination $t_d$, T, P, I, Q in jedem Regeldurchgang neu ausgegeben werden.

In der ganzen Betrachtung ist wichtig, dass nach wenigen Regeldurchgängen die ermittelte Bearbeitungsintensität a mit dem vorgegebenen Sollwert konvergiert und so möglichst rasch die erste Gleichung von Fig. 1 erfüllt ist, jedoch nicht übererfüllt wird, was sonst zu ständigen Regelschwingungen führen würde.

Für verschiedene Bearbeitungsarten müssen im allgemeinen abweichende Parameter-Anpass-Strategien vorprogrammiert werden, die meistens nur durch Versuche ermittelt werden können.

Als Beispiel gilt beim Drahtschneiden über verschiedene Werkstückhöhen die Forderung, dass die Schnittbreite konstant bleiben soll.

Eine Verkürzung der Pausenzeit P bewirkt eine Verbreiterung der Schnittbreite. Eine Verkürzung der mittleren Zündverzögerung $t_d$ bewirkt ebenfalls eine Erhöhung der Leistung p jedoch eine Verengung der Schnittbreite. Es ist klar ersichtlich, dass die beiden Parameter in diesem Fall gemeinsam geändert werden müssen, was sich auf die Schnittbreite kompensierend auswirkt.

Bei Senkbearbeiten gibt es ebenfalls physikalisch bedingte Zusammenhänge betreffend Abtragrate, Elektrodenverschleiss und Oberflächenqualität. Hier sei auf die einschlägige Literatur verwiesen, z.B. Dissertation von Dr. B. Schumacher, TH Aachen 1966 «Das Leistungsverhalten und der Werkzeugverschleiss bei der funkenerosiven Bearbeitung von Stahl mit Speicher- und Impulsgeneratoren».

Die Anpassung der Dielektrikumsspülmenge Q erfolgt erfindungsgemäss proportional zur ermittelten und gemittelten Leistung p. Dies leitet sich aus der Überlegung ab, dass in der Bearbeitungszone eine konstante Verschmutzung vorherrschen soll, und der Tatsache, dass die Erosionspartikel, die Prozesswärme und das Prozessgas ungefähr in proportionaler Menge zur Leistung p erzeugt werden.

Der Dielektrikumsregler 32 wird vorzugsweise aus einem elektrischen Schrittmotor gekoppelt mit einer leckfreien Dosierpumpe, z.B. einer Schlauchquetschpumpe aufgebaut. Ein solcher Aufbau hat gegenüber einem mechanischen Durchflussregler mit Stellantrieb den Vorteil einer einfachen und hochgenauen Ansteuerung über die Schrittfrequenz bei einem möglichen Regelbereich von mehr als drei Dekaden.

In einer bevorzugten Ausführungsform besteht der mathematische Prozessor 21 aus einem sogenannten Einchip-Mikroprozessor, d.h. einem Mikroprozessor, welcher in einem einzigen Modul integriert ist.

Es kommt dafür beispielsweise ein Produkt 8751 von INTEL, Santa Clara, Kalifornien, USA, in Frage.

Mit diesem Baustein ist es möglich, pro Sekunde maximal etwa 2000 komplette Regeldurchgänge der beschriebenen Art zu bewältigen.

Der Impulsgenerator 30 muss selbstverständlich an ein automatisches Regelsystem anschliessbar sein.

Bedienungsknöpfe sind durch elektrische Sollwerteingänge ersetzt. Ein solcher Generator ist z.B. in der DE-AS-2 547 767 beschrieben.

In Fig. 3 ist eine gleichartige Erosionsanlage dargestellt, mit dem Unterschied, dass der Strom i nicht über eine Messung, sondern aus dem Prozessparameter I, also dessen Sollwert, ermittelt wird. Dabei ist der individuellen Zündverzögerung $t_d$ jedes Impulses Rechnung zu tragen, und der Sollwert I nur auf die Multiplikatorschaltung 20 durchzulassen, wenn eine Entladung erfolgt ist. Dies kann über den digitalen Ausgang des Digital-Analog-Wandlers 12 festgestellt werden. Die Torschaltung 23 kann z.B. aktiviert werden sobald der digitale Wert u kleiner wird als der maximal mögliche, d.h. eine digitale Information die verschieden ist von z.B. H H H H.

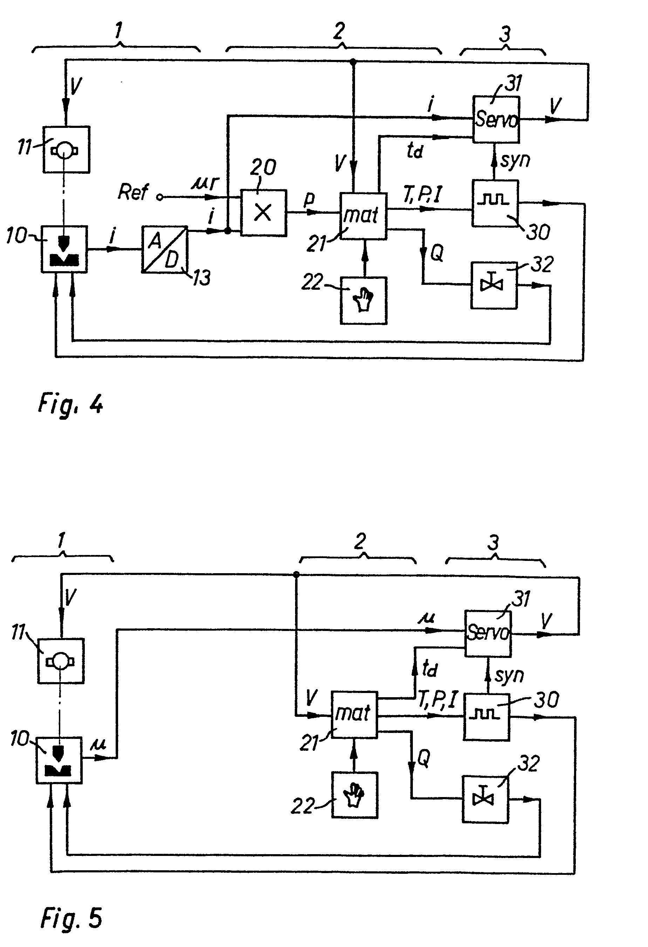

Fig. 4 zeigt eine weitere mögliche Ausführungsform einer solchen Erosionsanlage.

In diesem Fall wird nur der Strom i gemessen und als Prozessinformation für den Servoregler 31 und die Multiplikatorschaltung 20 verwendet.

Der Strom i wird in der Multiplikatorschaltung 20 dabei mit einem konstanten Wert, der Referenzspannung ur, welche einem Erfahrungswert der Funkenbrennspannung von ungefähr 25 Volt entspricht, multipliziert.

Dies ergibt zwar im Falle eines Kurzschlusses zu hohe Werte für die Leistung p, ist jedoch ein unbedeutend kurzzeitiger Auswertfehler, da ein solcher Kurzschluss sofort vom Servoregler 31 eliminiert wird.

Eine Ausführungsform wie sie Fig. 5 zeigt ist vorallem für ältere Erosionsanlagen, welche mit dem Prozessleitsystem nachgerüstet werden sollen, geeignet. Der Prozess wird hier im Gegensatz zu den vorerwähnten Ausführungsbeispielen über einen offenen Regelkreis für die Leistung p geführt. Mit anderen Worten, der Prozess wird hier nicht geregelt, sondern wohldosiert gesteuert.

Der mathematische Prozessor 21 empfängt hier nur vom Servoregler 31 die Information der aktuellen Vorschubgeschwindigkeit V sowie von der Eingabeeinheit 22 den Wert der gewünschten Bearbeitungsintensität a.

Es ist dabei nicht mehr möglich, nach der ersten Gleichung in Fig. 1 die aktuelle Bearbeitungsintensität a zu berechnen und den Vergleich mit der gewünschten Bearbeitungsintensität a zu ziehen.

Es ist jedoch möglich, nach der dritten Gleichung in Fig. 1 einen Sollwert für die Leistung p zu berechnen, und so den Regelkreis praktisch intern im mathematischen Prozessor 21 zu schliessen.

Das einzige Problem besteht nun darin, entsprechende Kombinationen für die Prozessparameter $t_d$, T, P, I, Q am mathematischen Prozessor 21 auszugeben, welche die berechnete Leistung p an die Funkenstrecke 10 liefern.

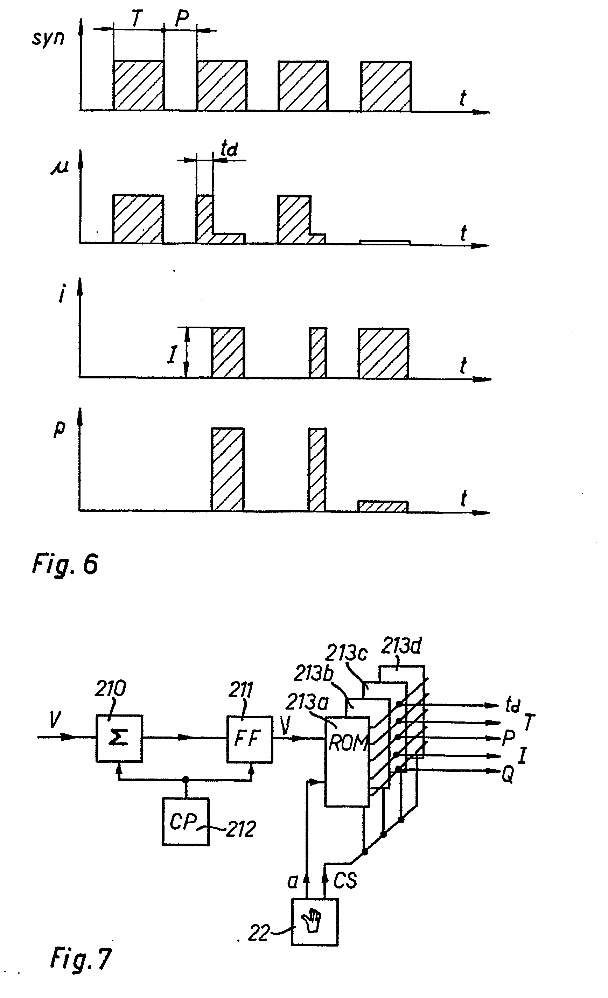

In Fig. 6 ist der zeitliche Verlauf für das Synchronisationssignal syn, die Spannung u, den Strom i und die Leistung p beispielhaft wiedergegeben. Es sind zusätzlich die Prozessparameter Impulszeit T, Pausenzeit P, Zündverzögerung $t_d$ und der Impulsstrom I eingezeichnet.

Man sieht daraus, dass die momentane Leistung p aus dem Impulsstrom I mal der erfahrungsmässigen Spannung u von etwa 25 Volt berechnet werden kann.

Für die über die Impulszeit T gemittelte Leistung p wird die momentane Leistung p mal die Differenz der Impulszeit T minus mittlere Zündverzögerung $t_d$ geteilt durch die Impulszeit T, und für die gemittelte Leistung p über eine Periode T + P wird die über die Impulszeit T gemittelte Leistung p mal die Impulszeit T geteilt durch die Summe von Impulszeit T plus Pausenzeit P gerechnet. Es lassen sich somit klare Voraussagen machen über die im Mittel aus einer Parameterkombination $t_d$, T, P, I, Q zu erwartende Leistung.

In Fig. 7 ist eine Ausführungsform für den mathematischen Prozessor 21 dargestellt, welche dieser möglichen Voraussage noch konsequenter Rechnung trägt. Diese Ausführungsform ist ebenfalls besonders für ältere Erosionsanlagen geeignet. Es wird angenommen, dass bei einer solchen Anlage die Vorschubgeschwindigkeit V in Form eines Vorschubtaktes von z.B. einem Takt pro Mikrometer und eines Vorschubrichtungssignales vorhanden ist. Diese beiden Signale werden auf die Zähleingänge eines Zählers 210 geführt und dort je nach Richtung aufsummiert. Nach einer durch einen Taktgenerator 212 bestimmten Zeitspanne wird der Zählerstand in einem Zwischenspeicher 211 abgespeichert, und anschliessend wird der Zähler 210 zurückgesetzt. Die so in digitale Form gebrachte mittlere Vorschubgeschwindigkeit V wird dann auf erste Adresseneingänge von einem oder mehreren Festwertspeicher 213 geführt. Wäre bei einer solchen Erosionsanlage die Vorschubgeschwindigkeit V nur in Form einer Analogspannung vorhanden, könnte diese über einen Analog-Digital-Wandler auf dieselben ersten Adresseneingänge geleitet werden.

Der Zähler 210, der Taktgenerator 212 und der Zwischenspeicher 211 können in diesem Fall weggelassen werden.

Auf zweite Adresseneingänge der Festwertspeicher 213 wird von der Eingabeeinheit 22 das Signal für die gewünschte Bearbeitungsintensität a zugeführt. Die Speicherplätze der Festwertspeicher 213 beinhalten nun für jede Adressenkombination eine Prozessparameterkombination $t_d$, T, P, I, Q, welche erstens den technologischen Anforderungen der auszuführenden Erosionsarbeit, zweitens den vorher beschriebenen Zusammenhängen für die zu erwartende mittlere Leistung p und drittens der Kombination der ersten und zweiten Adresseneingängen nach der dritten Gleichung in Fig. 1 entspricht.

Die technologischen Anforderungen sind heute weitgehend aus den Arbeitsunterlagen der verschiedenen Funkenerosionsmaschinenhersteller bekannt.

Es können beispielsweise die gleichen Festwertspeichermodule verwendet werden wie vorgehend für die Multiplikatorschaltung 20 vorgeschlagen wurde. Sollten 8 bit Datenausgang nicht ausreichen, um die Prozessparameterkombination $t_d$, T, P, I, Q zu umschreiben, können beliebig viele solcher Module mit parallelen Adresseneingängen parallel betrieben werden. Mit der gleichen Methode ist es möglich, für verschiedene Bearbeitungsarten verschiedene Parameterkombinationen vorzuprogrammieren. Dabei kann über einen sogenannten Chipselect-Eingang, also einem Modulwahl-Eingang der entsprechende Festwertspeicher 213a oder 213b oder 213c oder 213d aktiviert werden. Damit kann über die Eingabeeinheit 22 und eine Leitung CS die Bearbeitungsart, also z.B. die Materialpaarung, und ob abtragsintensiv oder verschleissarm bearbeitet werden soll, vorgegeben werden.

In den ganzen Betrachtungen wurden nur digitale Signalverarbeitungen vorgeschlagen. Es ist klar, dass alle Berechnungen und Vergleiche auch mit analogen Schaltkreisen nachgebildet werden können. Dies sind jedoch keine bevorzugten Ausführungsformen der Erfindung, da aus Kosten- und Störsicherheitsgründen eine Analogschaltung kaum über einen weiteren Bereich als zwei Dekaden betrieben werden kann.

### Patentansprüche

1. Verfahren zur automatischen Prozessführung beim funkenerosiven Bearbeiten unter stark veränderlichen Prozessbedingungen in der Funkenstrecke, die durch übermässige Änderung der Bearbeitungsflächen verursacht sind, wobei an der Funkenstrecke Spannung und Strom gemessen werden, dadurch gekennzeichnet, dass eine Multiplikatorschaltung (20) laufend die Leistung (p) aus Spannung (u) und Strom (i) ermittelt, dass die Vorschubgeschwindigkeit (V) von einem Servoregler (31) so nachgeführt wird, dass der Erosionsprozess mit einer vorwählbaren, mittleren Zündverzögerung (td) abläuft, und dass von einem mathematischen Prozessor (21) mindestens ein leistungsbeeinflussender Prozessparameter so geregelt wird, dass die Summe aus dem Logarithmus der Vorschubgeschwindigkeit (V) und zweieinhalbmal dem Logarithmus der gemittelten Leistung (p) immer einer vorgewählten Bearbeitungsintensität (a) entspricht.

2. Verfahren zur automatischen Prozessführung beim funkenerosiven Bearbeiten unter stark veränderlichen Prozessbedingungen in der Funkenstrecke, die durch übermässige Änderung der Bearbeitungsflächen verursacht sind, wobei an der Funkenstrecke die Spannung gemessen wird, dadurch gekennzeichnet, dass eine Multiplikatorschaltung (20) laufend die Leistung (p) aus Spannung (u) und Strom (i) ermittelt, dass die Vorschubgeschwindigkeit (V) von einem Servoregler (31) so nachgeführt wird, dass der Erosionsprozess mit einer vorwählbaren, mittleren Zündverzögerung (td) abläuft, dass von einem mathematischen Prozessor (21) mindestens ein leistungsbeeinflussender Prozessparameter so geregelt wird, dass die Summe aus dem Logarithmus der Vorschubgeschwindigkeit (V) und zweieinhalbmal dem Logarithmus der gemittelten Leistung (p) immer einer vorgewählten Bearbeitungsintensität (a) entspricht und dass der der Multiplikatorschaltung (20) zugeführte Wert des Stromes (i) simuliert wird, indem der Sollwert (I) für den Strom (i) vom Eingang des Generators (30) über eine Torschaltung (23) auf die Multiplikatorschaltung (20) zurückgeführt wird, wobei die Torschaltung (23) gesperrt bleibt, wenn die an der Funkenstrecke (10) gemessene Spannung (u) über einem Grenzwert liegt und den Sollwert (I) durchlässt, wenn die Spannung (u) unter diesem Grenzwert liegt.

3. Verfahren zur automatischen Prozessführung beim funkenerosiven Bearbeiten unter stark veränderlichen Prozessbedingungen in der Funkenstrecke, die durch übermässige Änderung der Bearbeitungsflächen verursacht sind, wobei an der Funkenstrecke der Strom gemessen wird, dadurch gekennzeichnet, dass der an der Funkenstrecke (10) gemessene Strom (i) an eine Multiplikatorschaltung (20) weitergeleitet wird und dort mit einer konstanten Referenzspannung (ur), welche der erfahrungsmässigen Funkenbrennspannung entspricht, multipliziert wird, dass die Vorschubgeschwindigkeit (V) von einem Servoregler (31) so nachgeführt wird, dass der Erosionsprozess mit einer vorwählbaren, mittleren Zündverzögerung (td) abläuft, und dass von einem mathematischen Prozessor (21) mindestens ein leistungsbeeinflussender Prozessparameter so geregelt wird, dass die Summe aus dem Logarithmus der Vorschubgeschwindigkeit (V) und zweieinhalbmal dem Logarithmus der gemittelten Leistung (p) immer einer vorgewählten Bearbeitungsintensität (a) entspricht.

4. Verfahren zur automatischen Prozessführung beim funkenerosiven Bearbeiten unter stark veränderlichen Prozessbedingungen in der Funkenstrecke, die durch übermässige Änderung der Bearbeitungsflächen verursacht sind, wobei auf die messtechnische Ermittlung der Leistung aus Spannung und Strom des Funkenspaltes verzichtet wird, dadurch gekennzeichnet, dass mindestens ein die genannte Leistung (p) beeinflussender Prozessparameter (td, T, P, I) in Abhängigkeit der Vorschubgeschwindigkeit (V) so gesteuert wird, dass die Summe aus dem Logarithmus der Vorschubgeschwindigkeit (V) und zweieinhalbmal dem Logarithmus der zu erwartenden mittleren Leistung (p) immer einer vorgewählten Bearbeitungsintensität (a) entspricht, wobei die den verschiedenen Prozessparameterkombinationen erfahrungsmässig entsprechenden, mittleren Leistungen (p) im mathematischen Prozessor (21) abgespeichert sind.

5. Verfahren nach einem der Ansprüche 1 bis 4, dadurch gekennzeichnet, dass die Dielektrikumsspülmenge (Q) über einen Dielektrikumsregler (32) proportional zu der Multiplikatorschaltung (20) und im mathematischen Prozessor (21) errechneten mittleren Leistung (p) geregelt wird.

6. Vorrichtung zur Durchführung des Verfahrens nach einem der Ansprüche 1 bis 3 oder 5, dadurch gekennzeichnet, dass Spannungseingang (u, ur) und Stromeingang (i) der Multiplikatorschaltung (20) Adresseneingänge eines digitalen Festwertspeichers sind und dass die Speicherplätze jeweils mit dem berechneten Produkt aus Spannung (u, ur) mal Strom (i) belegt sind.

7. Vorrichtung zur Durchführung des Verfahrens nach einem der Ansprüche 1 bis 3 oder 5, dadurch gekennzeichnet, dass der aus einem schnellen, programmierbaren Mikrorechner bestehende mathematische Prozessor (21) das digitale Leistungssignal (p) und das digitale Vorschubgeschwindigkeitssignal (V) empfängt und über eine erste Zeitperiode die Mittelwerte bildet und dass nach Ablauf dieser ersten Zeitperiode, während einer Auswertperiode, der Mittelwert der Vorschubgeschwindigkeit (V) logarithmiert wird, und dann der Mittelwert der Leistung (p) logarithmiert und mit dem Faktor zweieinhalb multipliziert wird, sowie die Summe der beiden erhaltenen Resultate gebildet wird, und dann diese Summe mit einem zuerst über die Eingabeeinheit (22) eingespeicherten Wert für die Bearbeitungsintensität (a) verglichen wird, und wenn diese Summe grösser als der eingespeicherte Wert ist, einen oder mehrere der ebenfalls vorgängig über die Eingabeeinheit (22) eingespeicherten Sollwerte der Prozessparameter (td, T, P, I) in Richtung Leistungsreduktion modifiziert wird und wenn die Summe gleich ist nichts geändert wird, und wenn die Summe grösser ist eine Leistungserhöhung vorgenommen wird, und dass der gebildete Mittelwert der Leistung (p) mit einem festen Faktor multipliziert wird, und dieser Wert über einen ersten Ausgang (Q) an den Dielektrikumsregler (32) ausgegeben wird und die weiteren Sollwerte der Prozessparameter (td, T, P, I) über weitere Ausgänge (td, T, P, I) an den Servoregler (31) und den Impulsgenerator (30) ausgegeben werden und dass nach dieser Auswertperiode wieder die erste Zeitperiode gestartet wird.

8. Vorrichtung zur Durchführung des Verfahrens nach Anspruch 4, dadurch gekennzeichnet, dass der mathematische Prozessor (21) einen Zähler (210), einen Zwischenspeicher (211), einen Taktgenerator (212) und mindestens einen Festwertspeicher (213a) enthält, wobei der Zähler (210) vom Servoregler (31) die Vorschubgeschwindigkeit (V) mittels einem Vorschubtaktsignal und einem Vorschubrichtungssignal empfängt und im Zähler (210) durch Vorwärtszählen oder Rückwärtszählen der Vorschubtakte, je nach Richtungssignal während einer durch den Taktgenerator (212) vorgegebenen Zeitperiode die Vorschubgeschwindigkeit (V) in binäre Form umgewandelt wird, und dass am Ende dieser Zeitperiode diese binäre Information in den Zwischenspeicher (211) geladen wird und dann vom Taktgenerator (212) der Zähler (210) zurückgesetzt wird, und dass vom Zwischenspeicher (211) die binär gespeicherte Vorschubgeschwindigkeit auf erste Adresseneingänge eines oder mehrerer Festwertspeicher (213a, 213b, 213c, 213d) geleitet wird, und von der Eingabeeinheit (22) die gewünschte Bearbeitungsintensität (a) in binärer Form auf zweite Adresseneingänge der Festwertspeicher (213) geleitet wird, und dass für jede mögliche Adressenkombination die Speicherplätze nach Anzahl der vorhandenen Prozessparameter (td, T, P, I, Q) aufgeteilt sind und diese Speicherplätze mit erfahrungsmässigen und vorausberechneten Werten für die Prozessparameter (td, T, P, I, Q) so belegt werden, dass der Logarithmus der Vorschubgeschwindigkeit (V) plus zweieinhalb mal dem Logarithmus der zu erwartenden Leistung (p) der gewünschten Bearbeitungsintensität (a) entspricht, und dass der Prozessparameter der Spülmenge (Q) der zu erwartenden Leistung (p) multipliziert mit einem festen Faktor entspricht, und dass für beliebig viele verschiedene Bearbeitungsarten beliebig viele Festwertspeicher (213a, 213b, ...) parallelgeschaltet sind wobei von der Eingabeeinheit (22) die gewünschte Bearbeitungsart über eine Leitung (CS) durch die Freigabe des entsprechenden Festwertspeichers (213) ausgewählt werden kann.

**Claims**

1. Method for automatic process control in spark-erosion processing under highly variable processing conditions in the spark path caused by excessive alteration of the processed surfaces wherein potential and current in the spark path are measured, characterized in that a multiplier circuit (20) continuously determines the power (p) from potential (u) and current (i), in that the feed speed (V) is adjusted by a servo-regulator (31) such that the erosion process proceeds with a pre-selectable mean firing delay (td) and in that at least one power-influencing process-parameter is so regulated by a mathematical processor (21) that the sum of the logarithm of the feed speed (V) plus two and one-half times the logarithm of the determined power (p) always corresponds to a pre-selected intensity of processing (a).

2. Method for automatic process control in spark-erosion processing under highly variable processing conditions in the spark path caused by excessive alteration of the processed surfaces wherein the potential in the spark path is measured, characterized in that a multiplier circuit (20) continuously determines the power (p) from potential (u) and current (i), in that the feed speed (V) is adjusted by a servo-regulator (31) such that the erosion process proceeds with a pre-selectable mean firing delay (td), in that at least one performance-influencing process-parameter is regulated by a mathematical processor (21) such that the sum of the logarithm of the feed speed (V) plus two and one half times the logarithm of the determined power (p) always corresponds to a pre-selected intensity of processing (a) and in that the value of the current (i) conducted to the multiplier circuit (20) is simulated by conducting the reference value (I) for the current (i) in feedback from the input of the generator (30) through a gate circuit (23) to the multiplier circuit (20) wherein the gate circuit (23) remains blocked if the potential (u) measured in the spark path (10) lies above a limit value and transmits the reference value (I) if the potential (u) lies below this limit value.

3. Method for automatic process control in spark-erosion processing under highly variable processing conditions in the spark path caused by excessive alterations of the processed surfaces wherein the current in the spark path is measured, characterized in that the current (i) measured in the spark path (10) is transmitted to a multiplier circuit (20) and is there multiplied with a constant reference potential (ur) corresponding to the pragmatic spark eroding potential, in that the feed speed (V) is adjusted by a servo-regulator (31) such that the erosion process proceeds with a pre-selectable mean firing delay (td) and in that at least one performance-influencing process-parameter is regulated by a mathematical processor (21) such that the sum of the logarithm of the feed speed (V) plus two and one half-times the logarithm of the determined power (p) always corresponds to a pre-selected intensity of processing (a).

4. Method for automatic process control in spark erosion processing under highly variable processing conditions in the spark path caused by excessive alteration of the processed surfaces wherein the measurement-technological determination of the power from potential and current in the spark gap is renounced, characterized in that at least one process-parameter (td, T, P, I) influencing the aforementioned power (p) is controlled in relation to the feed speed (V) such that the sum of the logarithm of the feed speed (V) plus two and one-half times the logarithm of the mean power (p) to be expected always corresponds to a pre-selected intensity of processing (a), wherein the mean powers (p) pragmatically corresponding to the various process-parameter combinations are stored in the mathematical processor (21).

5. Method according to one of the claims 1 to 4, characterized in that the quantity (Q) of dielectric flushing medium is regulated by a dielectric regulator (32) in proportion to the mean power (p) calculated in the multiplier circuit (20) and in the mathematical processor (21).

6. Apparatus for performing the method according to one of the claims 1 to 3 or 5, characterized in that potential input (u, ur) and current input (i) of the multiplier circuit (20) are address inputs of a digital read-only memory and in that the memory registers are each occupied by the calculated product of potential (u, ur) times current (i).

7. Apparatus for performing the method according to one of the claims 1 to 3 or 5, characterized in that the mathematical processor (21) consisting of a high-speed, programmable microcomputer receives the digital power signal (p) and the digital feed speed signal (V) and forms the mean values over a first time interval and in that, after expiration of this first time interval and during an evaluation interval, the mean value of the feed speed (V) is logarithmized and then the mean value of the power (p) is logarithmized and multiplied with the factor two and one-half as well as the sum of both obtained results being formed, and then this sum being compared with a value for the intensity of processing (a) initially stored via the input unit (22) and, if this sum is greater than the stored value, modifying one or more of the reference values of the process-parameters (td, T, P, I) also previously stored via the input unit (22) in the direction of power reduction and, if the sum is equal, nothing is changed and, when the sum is greater, a power increase is undertaken, and in that the formed mean value of the power (p) is multiplied with a constant factor and this value is delivered via a first output (Q) to the dielectric regulator (32) and the further reference values of the process-parameters (td, T, P, I) are delivered via further outputs (td, T, P, I) to the servo-regulator (31) and to the pulse generator (30) and in that, after this evaluation interval, the first time interval is restarted.

8. Apparatus for performing the method according to claim 4, characterized in that the mathematical processor (21) contains a counter (210), an intermediate storage register (211), a clock generator (212) and at least one read-only memory (213a), wherein the counter (210) receives the feed speed (V) from the servo-regulator (31) by means of a feed cycling signal and receives a feed direction signal and in that, in the counter (210), the feed speed (V) is converted into binary form by counting up or counting down the feed cycling pulses according to the direction signal during a time interval prescribed by the cycle generator (212), and in that, at the end of this time interval, these binary data are loaded into the intermediate storage register (211) and then the counter (210) is reset by the cycle generator (212), and in that the binary stored feed speeds are conducted from the intermediate storage register (211) to first address inputs of one or more read-only memories (213a, 213b, 213c, 213d), and the desired intensity of processing (a) is conducted in binary form from the input unit (22) to second address inputs of the read-only memory (213), and in that the storage registers are sub-divided according to number of process-parameters (td, T, P, I, Q) present for every possible address combination and these storage registers are so occupied with pragmatic and previously calculated values for the process-parameters (td, T, P, I, Q) such that the logarithm of the feed speed (V) plus two and one-half times the logarithm of the power (p) to be expected corresponds to the desired intensity of processing (a), and in that the process-parameter of the quantity (Q) of the flushing medium corresponds to the power (p) to be expected multiplied by a constant factor and in that, for randomly many different types of processing, randomly many read-only memories (213a, 213b, ...) are arranged in parallel, wherein the desired type of processing can be selected from the input unit (22) via a conductor (CS) by enabling the corresponding read-only memory (213).

**Revendications**

1. Procédé de commande automatique d'un processus d'usinage par étincelles dans des conditions d'extrême variabilité de la distance d'étincelage dues à une variation excessive des surfaces d'usinage, la tension et le courant étant mesurés d'après la distance d'étincelage, caractérisé en ce qu'un circuit multiplicateur (20) détermine en permanence le rendement (p) d'après la tension (u) et le courant (i), en ce que la vitesse d'avance (V) est déterminée en correspondance par un servo-régulateur (31), de telle manière que le processus d'érosion se déroule avec un retard à l'allumage moyen (td) que l'on peut choisir à l'avance et en ce qu'un processeur mathématique (21) règle au moins l'un des paramètres du procédé agissant sur le rendement de telle manière que la somme du logarithme de la vitesse d'avance (V) et de deux fois le logarithme du rendement (p) mesuré soit toujours égale à une intensité d'usinage (a) choisie à l'avance.

2. Procédé de commande automatique d'un processus d'usinage par étincelles dans des conditions d'extrême variabilité de la distance d'étincelage dues à une variation excessive des surfaces d'usinage, la tension étant mesurée d'après la distance d'étincelage, caractérisé en ce qu'un circuit multiplicateur (20) détermine en permanence le rendement (p) d'après la tension (u) et le courant (i), en ce que la vitesse d'avance (V) est déterminée en correspondance par un servo-régulateur (31) de telle manière que le processus d'érosion se déroule avec un retard à l'allumage moyen (td) que l'on peut choisir à l'avance, en ce qu'un processeur mathématique (21) règle au moins un paramètre agissant sur le rendement de telle manière que la somme du logarithme de la vitesse d'avance (V) et de deux fois et demi le logarithme du rendement mesuré (p) soit toujours égale à une intensité d'usinage (a) choisie à l'avance et en ce que la valeur du courant (i) fourni au circuit multiplicateur (20) est simulée du fait que la valeur de consigne (I) du courant (i) est ramenée de l'entrée du générateur (30) par un circuit porte (23) au circuit multiplicateur (20), le circuit porte (23) restant fermé lorsque la tension (u) mesurée d'après la distance d'étincelage (10) est supérieure à une valeur limite et laissant passer la valeur de consigne (I) lorsque la tension (u) est inférieure à cette valeur limite.

3. Procédé de commande automatique d'un processus d'usinage par étincelles dans des conditions d'extrême variabilité de la distance d'étincelage dues à une variation excessive des surfaces d'usinage, le courant étant mesuré d'après la distance d'étincelage, caractérisée en ce que le courant (i) mesuré d'après la distance d'étincelage (10) est envoyé à un circuit multiplicateur (20) et y est multiplié par une tension de référence (ur) constante qui correspond à la tension de production d'étincelles déterminée par l'expérience, en ce que la vitesse d'avance (V) est déterminée en correspondance par un servo-régulateur (31) de telle manière que le processus d'érosion se déroule avec un retard à l'allumage moyen (td) que l'on peut choisir à l'avance et en ce qu'un processeur mathématique (21) règle au moins un paramètre agissant sur le rendement de telle manière que la somme du logarithme de la vitesse d'avance (V) et de deux fois et demi le logarithme du rendement mesuré (p) soit toujours égale à une intensité d'usinage (a) choisie à l'avance.

4. Procédé de commande automatique d'un processus d'usinage par étincelles dans des conditions d'extrême variabilité de la distance d'étincelage dues à une variation excessive des surfaces d'usinage, dans laquelle on renonce à déterminer par une technique de mesure le rendement à partir de la tension et du courant dans l'intervalle d'étincelage, caractérisée en ce qu'au moins un des paramètres du procédé (td, T, P, I) agissant sur le rendement (p) déjà mentionné est commandé en fonction de la vitesse d'avance (V) de telle manière que la somme du logarithme de la vitesse d'avance (V) et de deux fois et demi le logarithme du rendement moyen (p) que l'on peut escompter soit toujours égale à une intensité d'usinage (a) choisie à l'avance, les rendements moyens (p) qui correspondent, d'après les expériences faites, aux différentes combinaisons de paramètres du procédé étant mémorisés dans le processus mathématique (21).

5. Procédé selon l'une des revendications 1 à 4, caractérisée en ce que la quantité (Q) de diélectrique d'arrosage est réglée par un dispositif de réglage (32) du diélectrique de manière à être proportionnelle au rendement moyen (p) calculé dans le circuit multiplicateur (20) et dans le processeur mathématique (21).

6. Dispositif pour l'application du procédé selon l'une des revendications 1 à 3 ou 5, caractérisé en ce que l'entrée de tension (u, ur) et l'entrée de courant (i) du circuit multiplicateur (20) sont les entrées d'adresses d'une mémoire de valeurs numériques fixes et en ce que les emplacements de mémorisation sont occupés dans chaque cas par le produit calculé de la tension (u, ur) par le courant (i).

7. Dispositif pour l'application du procédé selon l'une des revendications 1 à 3 ou 5, caractérisé en ce que le processeur mathématique (21), constitué par un microcalculateur rapide pouvant être programmé, reçoit le signal numérique de rendement (p) et le signal numérique de vitesse d'avance (V) et, pendant une première période, calcule les valeurs moyennes et en ce qu'à la suite de cette première période, pendant une période de traitement des données, il calcule le logarithme de la valeur moyenne de la vitesse d'avance (V) puis le logarithme de la valeur moyenne du rendement (p) qui est multiplié par le coefficient deux et demi, puis la somme des deux chiffres obtenus et compare cette somme à la valeur de l'intensité d'usinage (a) enregistrée et mémorisée d'abord par l'intermédiaire de l'unité d'entrée (22), en ce que si cette somme est supérieure à la valeur mémorisée, une ou plusieurs valeurs de consigne des paramètres du procédé (td, T, P, I), préalablement enregistrées et mémorisées par l'intermédiaire de l'unité d'entrée (22) sont modifiées dans le sens d'une diminution du rendement, en ce que si la somme est égale à la valeur mémorisée, il n'y a aucune modification et si la somme est supérieure, il y a augmentation du rendement et en ce que la valeur moyenne obtenue pour le rendement (p) est multipliée par un coefficient fixe, que la valeur ainsi obtenue est envoyée par une première sortie (Q) au dispositif de réglage du diélectrique (32) que les autres valeurs de consigne des paramètres du procédé (td, T, P, I) sont envoyées, par d'autres sorties (td, T, P, I) au servo-régulateur (31) et au générateur d'impulsions (30) et en ce qu'après cette période d'exploitation des données la première période recommence.

8. Dispositif pour l'application du procédé selon la revendication 4, caractérisée en ce que le processeur mathématique (21) contient un compteur (210) une mémoire de travail à accès très rapide (211), un rythmeur (212) et au moins une mémoire morte (213a), le compteur (210) recevant du servo-régulateur (31) la vitesse d'avance (V) par le moyen d'un signal d'horloge d'avance et d'un signal de direction d'avance et cette vitesse d'avance (V) étant mise sous forme binaire dans le compteur (210), par comptage avant et arrière des rythmes d'avance suivant le signal de direction pendant une période déterminée par le rythmeur (212), en ce qu'à la fin de cette période, cette information binaire est introduite dans la mémoire temporaire (211) et qu'ensuite le compteur (210) est ramené en arrière par le rythmeur (212), en ce qu'à partir de la mémoire temporaire (211) la vitesse d'avance binaire mémorisée est envoyée aux premières entrées d'adresses d'une ou plusieurs mémoires mortes (213a, 213b, 213c, 213d) et qu'à partir de l'unité d'entrée (22) l'intensité d'usinage voulue (a) est envoyée sous forme binaire aux deuxièmes entrées d'adresses des mémoires mortes (213), en ce que, pour chaque combinaison d'adresses possible, les emplacements de mémorisation sont répartis d'après le nombre des paramètres existants du procédé (td, T, P, I, Q) et que ces emplacements de mémorisation avec les valeurs des paramètres du procédé (td, T, P, I, Q) calculées à l'avance et selon l'expérience sont occupés de telle manière que le logarithme de la vitesse d'avance (V) plus deux fois et demi le logarithme du rendement escompté (p) correspond à l'intensité d'usinage voulue (a), en ce que le paramètre de procédé de la quantité (Q) d'arrosage est égal au rendement (p) que l'on peut escompter multiplié par un coefficient fixe et en ce que, pour des modes d'usinage en nombre quelconque, des mémoires mortes en nombre quelconque (213a, 213b, ...) sont montées en parallèle, l'unité d'entrée (22) permettant le choix du mode d'usinage voulu par l'intermédiaire d'une ligne (CS) par libération de la mémoire morte (213) correspondante.

$$a = \log V + 2{,}5 \log p$$

$$V = 10^{(a - 2{,}5 \log P)}$$

$$p = 10^{\left(\frac{a - \log V}{2{,}5}\right)}$$

Fig. 1

Fig. 2

Fig. 3

Fig. 4

Fig. 5

syn

T P

t

μ

td

t

i

I

t

p

t

**Fig. 6**

210    211    213c  213d
                213b
              213a

V → Σ → FF → V → ROM → td
                              T
                              P
                              I
                              Q

CP — 212

a ↑   CS

22

**Fig. 7**